Europäisches Patentamt

European Patent Office

Office européen des brevets

(11) Veröffentlichungsnummer: **0 416 543 A2**

## (12) EUROPÄISCHE PATENTANMELDUNG

(21) Anmeldenummer: 90116991.2

(51) Int. Cl.5: **F16J 15/34**

(22) Anmeldetag: 04.09.90

(30) Priorität: 06.09.89 DE 3929618

(43) Veröffentlichungstag der Anmeldung:
**13.03.91 Patentblatt 91/11**

(84) Benannte Vertragsstaaten:
**AT BE DE FR GB IT NL SE**

(71) Anmelder: **Feodor Burgmann Dichtungswerke GmbH & Co.**
**Äussere Sauerlacher Strasse 6-8**
**W-8190 Wolfratshausen 1(DE)**

(72) Erfinder: **Lerch, Wilfried, Dipl.-Ing.**
**Waldstr. 19**
**W-8192 Geretsried(DE)**
Erfinder: **Maier, Leonhard**
**Am Mitterfeld 3**
**W-8196 Eurasburg(DE)**
Erfinder: **Feigl, Peter, Dipl.-Ing.**
**Am Waldrand 2a**
**W-8137 Berg 4(DE)**
Erfinder: **Svejkowsky, Reinhard, Dipl.-Ing.**
**Zugspitzweg 24**
**W-8192 Geretsried(DE)**

(74) Vertreter: **Empl, Karl et al**
**Patentanwälte Dipl.-Ing. K. Empl Dipl.-Ing.,**
**Dipl.-Wirtsch.-Ing. K. Fehners**
**Schumannstrasse 2**
**W-8000 München 80(DE)**

(54) Ringanordnung für eine Gleitringdichtung und Verfahren zur Montage dieser Ringanordnung.

(57) Eine Ringanordnung für eine Gleitringdichtung, bestehend aus einem Ring (14), einem Trägerglied (16) und einer diese Bauteile abdichtenden Runddichtung (27). Der Ring (14) besitzt mehrere, jeweils zu seiner die Gleitfläche (13) enthaltenden ersten axialen Stirnseite sowie zu seinem inneren Umfang offene Aussparungen. Das Trägerglied (16) aus Metallblech enthält eine ringscheibenförmige Basis (17), an der der Ring (14) mit seiner zweiten axialen Stirnseite (29) abstützend anliegt und ein rohrförmiges Element (19), das den Ring (14) radial innen mit geringem Radialspiel übergreift und das Zungen (20b) aufweist, welche an einer ersten Biegestelle in die Aussparung hinein und an einer zweiten Biegestelle zurückgebogen sind. Der Ring (14) ist in Axialrichtung unverschieblich im Trägerglied (16) durch unmittelbare Anlage der stirnseitigen Wandungsflä-chen der Aussparungen an den inneren Begrenzungskanten (20″) der Zungen (20b) gehalten. Die Drehmomentübertragung wird durch Anlage der freien Zungen-Vorderkanten an radialen Wandungsflächen (25b) der Aussparungen erreicht. Die Ringanordnung (16) ist preisgünstig herstellbar und setzt den Ring (14) nur geringen Beanspruchungen aus.

FIG. 3

# RINGANORDNUNG FÜR EINE GLEITRINGDICHTUNG UND VERFAHREN ZUR MONTAGE EINER DERARTIGEN RINGANORDNUNG.

Die Erfindung betrifft eine Ringanordnung für eine Gleitringdichtung, enthaltend einen Ring aus einem verschleißfesten und/oder gleitfreudigen Werkstoff, an dessen ersten axialen Stirnseite eine in einer zur Längsachse lotrechten Radialebene gelegene Gleitfläche ausgebildet ist und der mehrere, in gleichen Winkelabständen um seinen Umfang verteilte Aussparungen aufweist, von denen jede nur zur ersten axialen Stirnseite sowie zum inneren Umfang oder zum äußeren Umfang des Rings offen ist und eine wenigstens näherungsweise in einer zur Radialebene parallelen Ebene liegende stirnseitige Wandungsfläche besitzt und enthaltend ein den Ring drehfest und abdichtend lagerndes ringförmiges Trägerglied aus Metallblech, bestehend aus einer zentralen Basis, gegen welche der Ring mit seiner zweiten axialen Stirnseite abgestützt ist und aus wenigstens einem einstückig von der Basis ausgehenden rohrförmigen Element, das wenigstens den an die zweite Stirnseite angrenzenden Abschnitt der axialen Länge des Rings radial innen und/oder radial außen spielfrei oder mit geringem Radialspiel übergreift, wobei das den Aussparungen benachbarte rohrförmige Element des Trägerglieds eine Mehrzahl von einstückig angeformten Zungen aufweist, die jeweils eine wenigstens näherungsweise in einer zur Radialebene parallelen Ebene liegende innere Begrenzungskante besitzen, an einer ersten Biegestelle um eine im wesentlichen zur Längsachse parallele Achse gebogen sind und in eine zugeordnete Aussparung hineinragen.

Eine bekannte Ringanordnung dieser Art (US-PS 2 995 391) ist für die Halterung des mit der Welle umlaufenden, in Axialrichtung gegen eine Feder verschieblichen Rings (Gleitrings) vorgesehen, der mit seiner Gleitfläche an derjenigen eines im Dichtungsgehäuse unbeweglich gehaltenen Gegenrings anliegt. Von der im Trägerglied dieser Ringanordnung enthaltenen zentralen Basis geht ein erstes rohrförmiges Element aus, in dessen Bohrung der Ring mit seiner zylindrischen Umfangsfläche gelagert und in Axialrichtung verschieblich ist. Von dem Ende dieses ersten rohrförmigen Elements steht ein ringscheibenförmiger Rand radial nach außen vor, zwischen dem und einem an der Welle festen Stützglied eine Schraubendruckfeder eingespannt ist. Von der zentralen Basis des Trägerglieds steht weiterhin, und zwar in der entgegengesetzten Axialrichtung, ein zweites rohrförmiges Element vor, das unter Zwischenschaltung des einen Einspannrandes einer elastischen Manschette unbeweglich an der Welle gehalten ist. Der andere, radial nach außen vorstehende Einspannrand der Manschette ist zwischen einem innerhalb des ersten rohrförmigen Elements angeordneten und gegen den radial äußeren Teil der zentralen Basis abgestützten Ringscheibe einerseits und der zweiten axialen Stirnseite des Rings andererseits angeordnet. Die zentrale Basis ist durch über lappend angeordnete, angenähert halbkreisförmige konzentrische Ausstanzungen so geschwächt, daß eine bedingte relative Axialbewegung des zweiten rohrförmigen Elements zum ersten rohrförmigen Element möglich ist und dadurch eine Anpressung des rotierenden Rings an dem Gegenring unter der Wirkung der Schraubendruckfeder. Die sehr kurzen, jeweils mit einer einfachen Biegung in die nicht näher erläuterten Aussparungen des rotierenden Rings hineingebogenen Zungen sind so angeordnet, daß ein großer Axialhub des Rings länges des ersten rohrförmigen Elements möglich ist, wobei diese Zungen, abgesehen von der Drehmomentübertragung, nur die Funktion haben, daß ein Zusammenhalt der einzelnen Bauteile der Ringanordnung im Anlieferungszustand gegeben ist.

Aufgabe der Erfindung ist es, eine Ringanordnung zu schaffen, welche preisgünstig herstellbar ist, eine einfache und beschädigungsfreie Montage auch empfindlicher Ringe gestattet und Beanspruchungen und Verformungen der Ringe bei der Einleitung von Kräften, insbesondere des Drehmoments, gering hält.

Erfindungsgemäß wird diese Aufgabe, ausgehend von einer Ringanordnung der eingangs genannten Art, dadurch gelöst, daß die Aussparungen des Rings jeweils wenigstens eine im wesentlichen radiale Wandungsfläche mit einem näherungsweise in einer die Längsachse enthaltenden Ebene liegenden Abschnitt besitzen, an die sich eine periphere Wandungsfläche anschließt, welche wenigstens näherungsweise auf einen Teil ihrer Ausdehnung eine zur Längsachse konzentrische Zylinderfläche ist, daß die in Umfangsrichtung gemessene Länge der Zungen des Trägers größer als deren in Axialrichtung gemessene Breite ist, daß jede Zunge an der ersten Biegestelle in die Aussparung hinein und an einer zu ihrer freien Vorderkante näher gelegenen zweiten Biegestelle um eine im wesentlichen zur Längsachse parallele weitere Achse zurückgebogen ist, dergestalt, daß die Abbiegung an jeder Biegestelle weniger als 45° beträgt und daß der zwischen der freien Vorderkante und der zweiten Biegestelle gelegene Zungenteil sich innerhalb der Aussparung näherungsweise in Umfangsrichtung erstreckt, daß im ausgebauten und im eingebauten Zustand der Ringanordnung der Ring in beiden Axialrichtungen unverschieblich vom Trägerglied gehalten ist, einerseits durch unmittelbare Anlage seiner zweiten Stirnseite an der zentralen Basis des Trägerglieds und andererseits durch unmittelbare Anlage der stirnseitigen Wandungsflächen an den inneren Begrenzungskanten der Zungen und daß wenigstens bei umlaufender Welle zur Drehmomentübertragung die freien Vorderkanten von in die gleiche Richtung weisenden Zungen an den ihnen benachbarten radialen Wandungsflächen anliegen.

Eine derartig ausgebildete Ringanordnung erlaubt eine exakte axiale Lagerung des Rings und minimiert seine Beanspruchung und Verformung dadurch, daß bei Drehmomentübertragung die Kräfte wenigstens angenähert tangential eingeleitet werden.

Eine Drehmomentübertragung bei wechselnder Drehrichtung der Welle zwischen dem Ring und seinem Trägerglied kann einfach dadurch erhalten werden, daß ein erster Teil der Zungen im Uhrzeigersinn und ein zweiter Teil der Zungen entgegen dem Uhrzeigersinn gerichtet ist. Diese Ausbildung bringt auch Vorteile bei einer nur in einer Drehrichtung umlaufenden Welle, bei der zwar der eine Teil der Zungen für die Drehmomentübertragung nicht beiträgt, mit seinen axial inneren Begrenzungskanten aber für geringe Beanspruchung des Rings bei seiner axialen Halterung sorgt. Gemäß einer bevorzugten Ausführungsform ist jeweils ein Paar von im und gegen den Uhrzeigersinn gerichteten, mit ihren freien Vorderkanten voneinander wegweisenden Zungen in einer gemeinsamen Aussparung angeordnet.

Das ringförmige Trägerglied ist vorteilhaft im Querschnitt U-förmig ausgebildet, wobei dessen zentrale Basis die Form einer ebenen Ringscheibe aufweist und dessen beiden rohrförmigen Elemente den an die zweite Stirnseite angrenzenden Längenabschnitt des Rings umschließen. Vorteilhaft ist weiterhin der Ring gegen das Trägerglied mittels eines in einer umlaufenden Nut des Rings angeordneten Runddichtringes abgedichtet.

Zum Montage der Ringanordnung wird vorzugsweise von einem ringförmigen Trägerglied ausgegangen, dessen Zungen noch in Fluchtrichtung mit dem rohrförmigen Element liegen, an das die Zungen angeformt sind, wonach in das Trägerglied der Runddichtring und der Ring eingebracht werden und dann durch axiale Kraftausübung unter elastischer Verformung des Runddichtringes die zweite Stirnseite des Rings zur Anlage an der zentralen Basis des Trägergliedes gebracht wird. Unter Beibehaltung dieses Zustandes wird dann an jeder Zunge an einer von deren freien Vorderkante zurückversetzten Stelle ein Werkzeug durch axialen Vorschub zum Angriff gebracht, das mit zwei gabelförmig zusammenhängenden Backen radial einander gegenüberliegenden Flächen der Zunge erfaßt, worauf durch eine Drehbewegung um die Werkzeug-Längsachse die Zunge unter plastischer (dauernder) Verformung in die Ausnehmung hineingebogen wird. Eine Montage ist aber auch in der Weise möglich, daß die Zungen bereits vor dem Zusammenbau eine bleibende Verformung erfahren, welche der späteren Lage in den Ausnehmungen entspricht und daß die Zungen während des Zusammenbaus zurückgebogen werden und dann elastisch in ihre ursprüngliche Lage zurückfedern und dabei in den Aussparungen des Rings zu liegen kommen.

Ein Ausführungsbeispiel der Erfindung wird nachstehend an Hand der Zeichnungen erläutert, in denen zeigt:

Fig. 1 Die obere Hälfte einer eine erfindungsgemäß ausgebildete Ringanordnung enthaltenden Gleitringdichtung;

Fig. 2 eine Draufsicht auf die Ringanordnung gemäß der Linie II - II in Fig. 1 und

Fig. 3 eine gemäß der Linie III - III in Fig. 2 teilweise geschnittene perspektivische Darstellung eines Teils der Ringanordnung, jedoch mit geänderter Ausbildung der Nebendichtung.

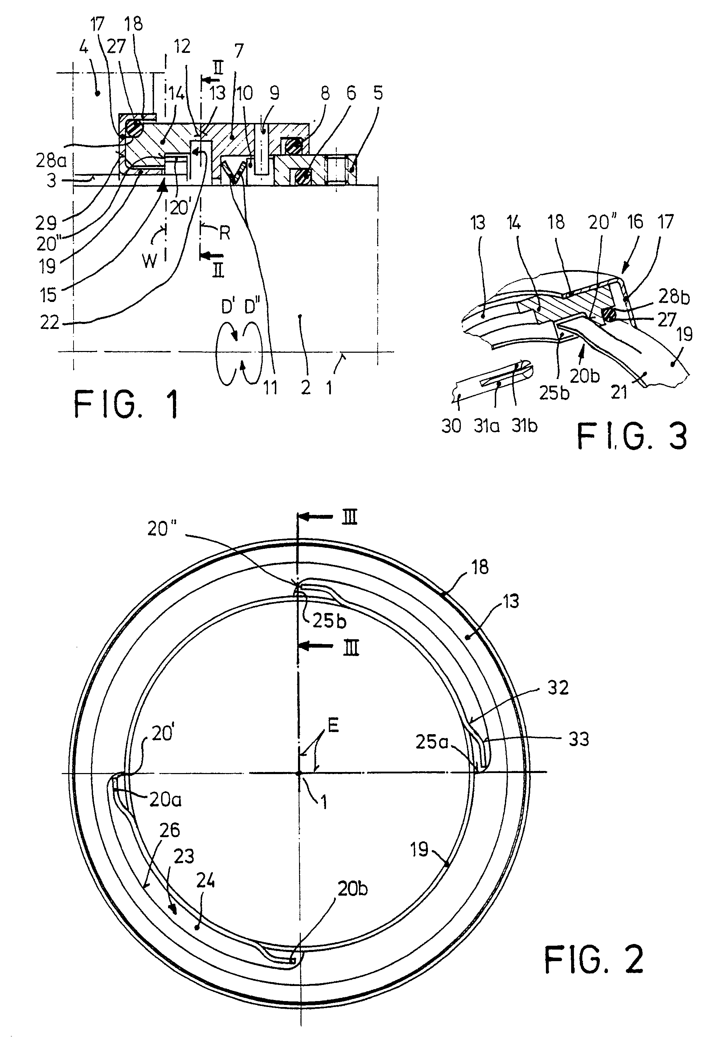

Die in Fig. 1 dargestellte Gleitringdichtung dient zur Abdichtung einer um eine Längsachse 1 wahlweise in einer ersten Drehrichtung $D'$ oder der umgekehrten, zweiten Drehrichtung $D''$ umlaufenden Welle 2, welche durch die Bohrung 3 einer Wand 4 (eines Maschinenteils oder eines Dichtungsgehäuses)hindurchtritt.

Auf jeder Welle 2 ist eine Hülse 5 drehfest und axial unverschieblich befestigt und durch eine Nebendichtung 6 abgedichtet. Auf dem zylindrischen Außenumfang der Hülse 5 ist ein Gleitring 7 axial verschieblich gelagert und durch eine dynamische Nebendichtung 8 abgedichtet. An einem Gleitring 7 ist ein radialer Zylinderstift 9 befestigt, der in einen achsparallelen Schlitz 10 der Hülse 5 eingreift und dadurch für eine Drehmomentübertragung zwischen dem Gleitring und der Hülse sorgt. Zwei Tellerfedern 11 erteilen dem Gleitring 7 eine axiale Vorspannung, dergestalt, daß seine Gleitfläche 12 federnd an der Gleitfläche 13 eines Rings (Gegenrings) 14 anliegt, welcher in einer nachstehend näher erläuterten Ringanordnung 15 enthalten ist.

Die Ringanordnung 15 weist ein durch Tiefziehen von Metallblech hergestelltes, mittels Preßsitz in einer Innenschulter der Wand 4 abdichtend befestigtes ringförmiges Trägerglied 16 auf, das im Querschnitt U-förmig ausgebildet ist und das eine zentrale Basis 17 in Form einer ebenen Ringscheibe enthält, von der ein radial äußeres rohrförmiges Element 18 und ein radial inneres rohrförmiges Element 19 in jeweils in der gleichen Richtung zum Gleitring 7 vorstehen. Beide rohrförmigen Elemente sind koaxial zur Längsachse 1. Ausgehend vom freien stirnseitigen Rand des inneren rohrförmigen Elements 19 sind an diesem durch vier L-förmige Trennschnitte, welches jeweils in einer die Längsachse 1 enthaltenden Ebene E sowie in einer zur Radialebene R parallelen Ebene W geführt sind, vier Zungen 20a, 20b ausgebildet. Diese Trennschnitte sind ferner so geführt, daß jeweils von einem zwischen zwei Zungen verbleibendem Stegteil 21 diese Zungen in entgegengesetzten Richtungen vorstehen.

Die Gleitfläche 13 des Rings 14 grenzt an seinem Außenumfang an. Radial innerhalb der Gleitfläche enthält der Ring 14 zwei Aussparung 23 (Fig. 2), welche von seiner ersten Stirnseite 22 und seinem Innenumfang ausgehen. Jede Aussparung 23 ist von einer stirnseitigen Wandungsfläche 24, zwei radialen Wandungsflächen 25a, 25b und einer peripheren Wandungsfläche 26 begrenzt. Die stirnseitige Wandungsfläche 24 liegt im wesentlichen in der gleichen Ebene W wie der eine Schenkel der L-förmigen Trenn schnitte zur Bildung der Zungen 20a, 20b. Die beiden radialen Wandungsflächen 25a, 25b jeder Aussparung 23 liegen wenigstens näherungsweise auf die Längsachse 1 enthaltenden Ebenen E, welche einen Winkel von ca. 90° einschließen und welche auch die freien Vorderkanten 20' der Zungen 20a, 20b definieren. Die periphere Wandungsfläche 26 jeder Aussparung hat die Gestalt eines Kreiszylinders um die Längsachse 1 und geht über gerundete Kanten in die radialen Wandungsflächen 25a, 25b über.

Zur Abdichtung des Rings 14 gegenüber dem Trägerglied 16 ist ein Runddichtring 27 vorgesehen, der in einer umlaufenden Nut des Rings angeordnet ist. Abhängig von den Einsatzbedingungen und einer evtl. beabsichtigten Rückenentlastung des Rings 14 ist diese Nut 28a bzw. 28b angrenzend zum Außenumfang des Ringes 14 (siehe Fig. 1) oder angrenzend zum Innenumfang des Rings (siehe Fig. 3) an dessen zweiter Stirnseite 29 angeordnet.

Zum Zusammenbau der Ringanordnung 15 wird der Ring 14 in den Hohlraum des Trägergliedes 16 unter Komprimierung des Runddichtringes 27 eingeschoben und mit seiner zweiten Stirnseite 29 zur Anlage an der zentralen Basis 17 des Trägerglieds gebracht. Anschließend werden die Zungen 20a, 20b radial nach außen unter deren plastischen Verformung in die Aussparungen 23 hineingebogen. Zu diesem Zweck wird ein Werkzeug 30 verwendet, dessen vorderer Teil in Fig. 3 veranschaulicht ist und das zwei gabel förmig miteinander verbundene Backen 31a, 31b aufweist, welche zueinander parallele Flächen besitzen, deren Abstand etwas größer als die Dicke der Zungen 20a, 20b ist.

Dieses Werkzeug wird in seiner Axialrichtung und parallel zur Längsachse 1 vorgeschoben, bis seine Backen eine Zunge beidseitig umfassen, worauf durch eine Drehung des Werkzeugs um seine Längsachse die Verbiegung der Zungen erfolgt. Dabei legt sich während einer ersten Phase des Biegevorganges die freie Vorderkante 20', welche durch den bereits erläuterten, in der Ebene E geführten Trennschnitt gebildet wurden, abstützend gegen die periphere Wandungsfläche 26 der Aussparung 23. Nach einer kleinen elastischen Rückfederung nach Entfernen des Werkzeugs 30 weisen die Zungen 20a, 20b eine generell als gestreckte S- bzw. Z-Form beschreibbare Form auf, wie sie in Fig. 2 veranschaulicht ist. Dabei wird jede Zunge 20a, 20b an einer ersten (inneren) Biegestelle 32, welche dem Stegteil 21 benachbart ist, unter einem Winkel von weniger als 45° um eine zur Drehachse 1 parallele Achse in die Aussparung 23 des Rings 14 hineingebogen. An einer zweiten (äußeren) Biegestelle 33, welche zwischen der ersten Biegestelle 32 und der Vorderkante 20' gelegen ist, erfolgt ebenfalls um eine zur Drehachse 1 parallele Achse unter einem kleineren Winkel als 45° eine Rückbiegung, dergestalt, daß sich der zwischen dieser zweiten Biegestelle 33 und der freien Vorderkante gelegene äussere Zungenteil völlig innerhalb der Aussparung 23 befindet und sich wenigstens näherungsweise parallel zu einer Ebene erstreckt, welche zur Längsachse 1 parallel verläuft und die Austrittstelle der radialen Nut-Wandungsfläche 25a bzw. 25b zum inneren Umfang des Rings 14 tangiert.

Die inneren Begrenzungskanten 20" der Zungen 20a, 20b, welche durch die früher erläuterten, in der Ebene W geführten Trennschnitte gebildet wurden, liegen an den stirnseitigen Wandungsflächen 24 der Aussparungrn 23 und bewirken, daß der Ring 14 in Axialrichtung unverschieblich im Trägerglied 16 gehalten wird. Die freien Vorderkanten 20' der Zungen 20a, 20b befinden sich unmittelbar vor den zugeordneten radialen Wandungsflächen 25a bzw. 25b der Aussparungen und bewirken die Drehmomentübertragung von Trägerglied 16 zum Ring 14.

## Ansprüche

1. Ringanordnung (15) für eine Gleitringdichtung, enthaltend einen Ring (14) aus einem verschleißfesten und/oder gleitfreudigen Werkstoff, an dessen ersten axialen Stirnseite (22) eine in einer zur Längsachse (1) lotrechten Radialebene (R) gelegene Gleitfläche (13) ausgebildet ist und der mehrere, in gleichen Winkelabständen um seinen Umfang verteilte Aussparungen (23) aufweist, von denen jede nur zur ersten axialen Stirnseite (22) sowie zum inneren Umfang oder zum äußeren Umfang des Rings (14) offen ist und eine wenigstens näherungsweise in einer zur Radialebene (R) parallelen Ebene (W) liegende stirnseitige Wandungsfläche (24) besitzt

und enthaltend ein den Ring (14) drehfest und abdichtend lagerndes ringförmiges Trägerglied (16) aus Metallblech, bestehend aus einer zentralen Basis (17), gegen welche der Ring (14) mit seiner zweiten axialen Stirnseite (29) abgestützt ist und aus wenigstens einem einstückig von der Basis (17) ausgehenden rohrförmigen Element (18; 19), das wenigstens den an die zweite Stirnseite (29) angrenzenden Abschnitt der axialen Länge des Rings (14) radial innen und/oder radial außen spielfrei oder mit geringem Radialspiel übergreift, wobei das den Aussparungen (23) benachbarte rohrförmige Element (19) des Trägerglieds (16) eine Mehrzahl von einstückig angeformten Zungen (20a; 20b) aufweist, die jeweils eine wenigstens näherungsweise in einer zur Radialebene (R) parallelen Ebene liegende innere Begrenzungskante (20″) besitzen, an einer ersten Biegestelle (32) um eine im wesentlichen zur Längsachse (1) parallele Achse gebogen sind und in eine zugeordnete Aussparung (23) hineinragen, **dadurch gekennzeichnet,**

daß die Aussparungen (23) des Rings (14) jeweils wenigstens eine im wesentlichen radiale Wandungsfläche (25a; 25b) mit einem näherungsweise in einer die Längsachse (1) enthaltenden Ebene (E) liegenden Abschnitt besitzen, an die sich eine periphere Wandungsfläche (26) anschließt, welche wenigstens näherungsweise auf einen Teil ihrer Ausdehnung eine zur Längsachse (1) konzentrische Zylinderfläche ist,

daß die in Umfangsrichtung gemessene Länge der Zungen (20a; 20b) des Trägers (16) größer als deren in Axialrichtung gemessene Breite ist,

daß jede Zunge (20a; 20b) an der ersten Biegestelle (32) in die Aussparung (23) hinein und an einer zu ihrer freien Vorderkante (20′) näher gelegenen zweiten Biegestelle (33) um eine im wesentlichen zur Längsachse parallele weitere Achse zurückgebogen ist, dergestalt, daß die Abbiegung an jeder Biegestelle weniger als 45° beträgt und daß der zwischen der freien Vorderkante (20′) und der zweiten Biegestelle (33) gelegene Zungenteil sich innerhalb der Aussparung (23) näherungsweise in Umfangsrichtung erstreckt,

daß im ausgebauten und im eingebauten Zustand der Ringanordnung der Ring (14) in beiden Axialrichtungen unverschieblich vom Trägerglied (16) gehalten ist, einerseits durch unmittelbare Anlage seiner zweiten Stirnseite (29) an der zentralen Basis (17) des Trägerglieds (16) und andererseits durch unmittelbare Anlage der stirnseitigen Wandungsflächen (24) an den inneren Begrenzungskanten (20″) der Zungen (20a; 20b) und

daß wenigstens bei umlaufender Welle (2) zur Drehmomentübertragung die freien Vorderkanten (20′) von in die gleiche Richtung weisenden Zungen (20a; 20b) an den ihnen benachbarten radialen Wandungsflächen (25a; 25b) anliegen.

2. Ringanordnung nach Anspruch 1, **dadurch gekennzeichnet,** daß die Zungen (20a; 20b) durch L-förmige Trennschnitte im rohrförmigen Element (19) des Trägerglieds (16) gebildet sind.

3. Ringanordnung nach Anspruch 1, für eine Gleitringdichtung mit wechselnder Drehrichtung, **dadurch gekennzeichnet,** daß ein erster Teil der Zungen (20a) im Uhrzeigersinn und ein zweiter Teil der Zungen (20b) entgegen dem Uhrzeigersinn gerichtet ist.

4. Ringanordnung nach Anspruch 3, **dadurch gekennzeichnet,** daß jeweils ein Paar von in und gegen den Uhrzeigersinn gerichteten, mit ihren freien Vorderkanten (20′) voneinander wegweisenden Zungen (20a; 20b) in einer gemeinsamen Aussparung (23) angeordnet sind.

5. Ringanordnung nach Anspruch 1, **dadurch gekennzeichnet,** daß das ringförmige Trägerglied (16) im Querschnitt U-förmig ausgebildet ist, wobei dessen zentrale Basis (17) die Form einer ebenen Ringscheibe aufweist und wobei dessen beiden rohrförmigen Elementen (18; 19) den Längenabschnitt des Rings (14) umschließen, der an dessen zweite Stirnseite (29) angrenzt.

6. Ringanordnung nach Anspruch 1 oder 5, **dadurch gekennzeichnet,** daß der Ring (14) gegen das Trägerglied (16) mittels eines in einer umlaufenden Nut (28a; 28b) des Rings angeordneten Runddichtrings (27) abgedichtet ist.

7. Ringanordnung nach Anspruch 6, **dadurch gekennzeichnet,** daß die den Runddichtring (27) aufnehmende Nut (28a; 28b) am radial äußeren oder radial inneren Umfang der zweiten Stirnseite (29) des Rings (14) ausgebildet ist.

8. Verfahren zur Montage einer Ringanordnung gemäß einem der Ansprüche 1 - 7, **dadurch gekennzeichnet,** daß von einem ringförmigen Trägerglied (16) ausgegangen wird, dessen Zungen (20a; 20b) noch in axialer Fluchtrichtung mit dem rohrförmigen Element (19) liegen, an das diese Zungen angeformt sind, daß in das Trägerglied (16) der Runddichtung (27) und der Ring (14) eingebracht werden, daß durch axiale Kraftausübung unter elastischer Verformung des Runddichtrings die zweite Stirnseite (29) des Rings (14) zur Anlage an der zentralen Basis (17) des Trägerglieds (16) gebracht wird und daß an jeder Zunge (20a; 20b) an einer von deren freien Vorderkante (20′) zurückversetzten Stelle ein Werkzeug (30) durch axialen Vorschub zum Angriff gebracht wird, das mit zwei gabelförmigen zusammenhängenden Backen (31a; 31b) radial einander gegenüberliegende Flächen der Zungen erfaßt und daß durch eine Drehbewegung um die Werkzeug-Längsachse die Zungen (20a; 20b) unter plastischer (dauernder) Verformung in die Aussparung (23) hineingebogen werden.

FIG. 1

FIG. 3

FIG. 2